**Europäisches Patentamt**

**European Patent Office**

**Office européen des brevets**

(11) Veröffentlichungsnummer: **0 095 728**
A2

## (12) EUROPÄISCHE PATENTANMELDUNG

(21) Anmeldenummer: **83105197.4**

(51) Int. Cl.³: **A 01 B 45/00,** A 01 D 55/18

(22) Anmeldetag: **26.05.83**

(30) Priorität: 26.05.82 DE 3219656
04.12.82 DE 3244934

(43) Veröffentlichungstag der Anmeldung: **07.12.83**
**Patentblatt 83/49**

(84) Benannte Vertragsstaaten: **AT CH FR GB IT LI**

(71) Anmelder: **Burkhart, Friedrich, Ahornweg 15,
D-7472 Winterlingen 2 (DE)**

(72) Erfinder: **Burkhart, Friedrich, Ahornweg 15,
D-7472 Winterlingen 2 (DE)**

(74) Vertreter: **Ott, Elmar, Dipl.-Ing., Poststrasse 24,
D-7030 Böblingen (DE)**

(54) **Einsatz für Rasenreiniger.**

(57) Die Erfindung bezieht sich auf einen Einsatz für Rasenreiniger, der auch an bekannten Rasenmähern angebracht werden kann. Der Einsatz besteht aus einer runden Scheibe, an der mehrere verteilt angeordnete Stahlstifte angebracht sind. Im Betrieb wird der Einsatz in Rotation versetzt, so daß die Stahlstifte den Rasen lüften und säubern. Auch kleinere Unebenheiten werden durch den erfindungsgemäßen Einsatz beseitigt.

PATENTANWALT
DIPL.-ING. ELMAR OTT

0095728

European Patent Attorney
Poststraße 24
D-7030 Böblingen

-1-

Anmelder: Friedrich Burkart
7472 Winterlingen-Harthausen

Einsatz für Rasenreiniger

Die Erfindung betrifft einen Einsatz für Rasenreiniger, der von einer senkrechten Antriebswelle des Rasenreinigers in Rotation versetzt wird und mit nach unten gerichteten Stiften in den Rasen eingreift.

Zur Säuberung verfilzter Rasenflächen sind sogenannte Vertikutierer bekannt. Es werden auch Einsätze für Rasenmäher angeboten, die beispielsweise an der senkrechten Antriebswelle eines Rasenmähers befestigt werden können. Diese bekannten Einsätze sind balkenförmig ausgebildet und tragen an jedem der beiden Enden einen federnden, nach unten gerichteten Stift. Die Stifte sind dabei in gleichem Abstand von der Antriebswelle entfernt befestigt. Mit diesen bekannten Einsätzen läßt sich jedoch eine Reinigung verfilzter Rasen nur bedingt durchführen.

Der Erfindung liegt die Aufgabe zugrunde, einen Einsatz für Rasenreiniger zu schaffen, mit dem eine gründliche Säuberung von Rasenflächen möglich ist und mit dem kleinere Bodenunebenheiten ausgeglichen werden

./.

können.

Die Lösung dieser Aufgabe wird bei einem Einsatz der eingangs genannten Gattung dadurch erhalten, daß der Einsatz eine Scheibe ist, die mehrere verteilt angeordnete Stifte hat. Durch die kreisförmige Form des Einsatzes wird eine hohe Stabilität erreicht. Außerdem ermöglicht diese Ausführungsform die Anbringung mehrerer Stifte, die je nach Einsatz entsprechend verteilt an der Scheibe befestigt sein können.

Vorzugsweise sind die Stifte als Stahlnägel ausgebildet, die in Bohrungen der Scheibe eingesetzt sind.

Die Stahlstifte können in den Bohrungen beweglich befestigt sein, damit sie auch bei Berührung mit größeren Steinen nicht abbrechen.

Eine Weiterbildung der Erfindung sieht vor, daß jeder der Stifte einen anderen Abstand vom Mittelpunkt der Scheibe hat, als die übrigen Stifte. Die Stifte sind also gegenseitig auf Lücke versetzt, so daß die Rasenfläche besonders gleichmäßig gereinigt werden kann.

Die Stifte können in einer Reihe oder über die gesamte Scheibe verteilt angeordnet sein. Dabei sollte jedoch möglichst darauf geachtet werden, daß die Lage der Stifte so gewählt ist, daß keine Unwucht entsteht.

Die Stifte können in vorteilhafter Weise auch so an der Scheibe befestigt sein, daß die Stifte mit einem vorgegebenen Neigungswinkel an der Scheibe befestigt sind, so daß die abstehenden Spitzen der Stifte entgegen der Drehrichtung nach hinten gerichtet sind. Auf diese Weise werden die Stifte ebenfalls vor Be-

./.

schädigungen durch größere Steine geschützt.

Die Erfindung wird nachfolgend anhand der Zeichnungen näher erläutert. Es zeigen:

Fig. 1 die Ansicht eines erfindungsgemäßen Einsatzes von oben,

Fig. 2 die Seitenansicht des in Fig. 1 dargestellten Einsatzes,

Fig. 3 die Draufsicht eines Einsatzes mit geneigten Stiften und

Fig. 4 eine weitere Ausführungsform eines erfindungsgemäßen Einsatzes von unten.

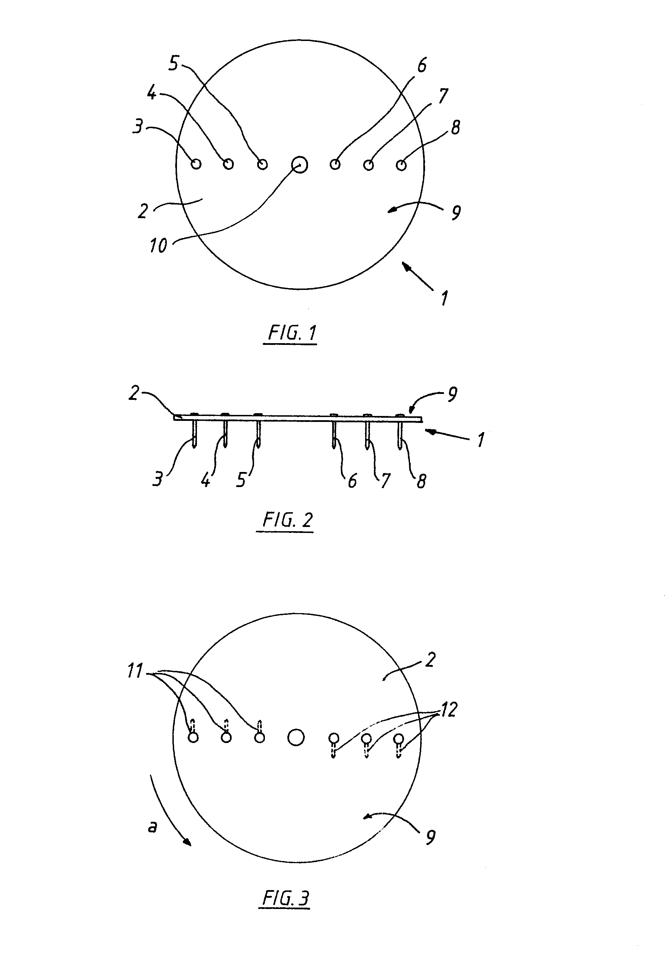

Der in Fig. 1 dargestellte Einsatz 1 besteht aus einer Scheibe 2, an der mehrere Stahlstifte 3-8 befestigt sind. Diese Stahlstifte können als Nägel ausgebildet sein, deren Köpfe an der Oberseite 9 der Scheibe 2 heraustreten. In der Mitte der Scheibe 2 ist eine Aussparung 10 vorgesehen, die zur Aufnahme der Antriebswelle eines Rasenmähers oder Rasenreinigungsgerätes dient.

In Fig. 2 ist die Seitenansicht des in Fig. 1 dargestellten Einsatzes 1 angegeben. Der Durchmesser der Scheibe 2 kann beispielsweise für die Verwendung in bekannten Rasenmähern zwischen 42 und 48 cm betragen. Dabei kann die Scheibe aus einem 2 mm starken Stahlblech bestehen, an dem die Durchführungen oder Bohrungen für die Aufnahme der Nägel 3-8 vorgesehen sind. Im dargestellten Ausführungsbeispiel stehen die Stahlnägel 3-8 senkrecht nach unten.

./.

Fig. 3 zeigt die Draufsicht einer anderen Ausführungsform, bei der die Stahlstifte oder Stahlnägel 11, 12
mit einer Neigung an der Scheibe 2 befestigt sind.
Im Betrieb rotiert der Einsatz in der angegebenen
Pfeilrichtung a. Die Stahlstifte 11 und 12 sind
entgegend der Drehrichtung a geneigt.

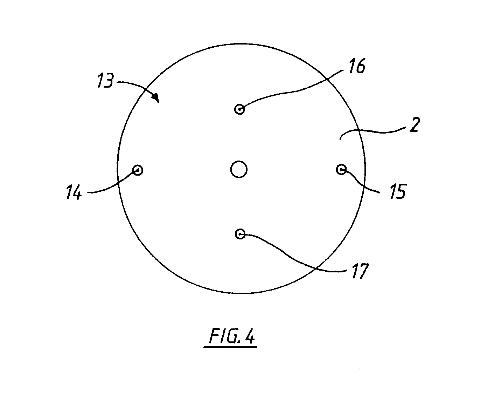

Fig. 4 zeigt eine weitere Ausführungsform eines
Einsatzes, bei dem die an der Unterseite 13 befestigten
Stahlstifte 14 bis 16 derart verteilt befestigt sind,
daß keine Unwucht durch die Anbringung der Stahlstifte
entsteht. Die Stahlstifte können natürlich auch jeweils einen anderen Abstand zum Mittelpunkt der Scheibe
2 haben, wobei dann ebenfalls darauf geachtet werden
sollte, daß der gesamte Einsatz keine Unwucht hat.

Es wird noch angemerkt, daß der Einsatz nicht nur in
Rasenmähern verwendet werden kann, sondern auch in
Verbindung mit landwirtschaftlichen Geräten, wie
Kreiselmäher, für die Rasenreinigung geeignet ist.
Der erfindungsgemäße Einsatz befreit den Rasen nicht
nur vom Moos oder von Verfilzungen, sondern er beseitigt auch kleine Unebenheiten, wie Maulwurfshaufen,
und kämmt Steinchen aus.

Die Stifte können auch durch eine leistenförmige Abdeckung gegen Herausfallen gesichert sein. Eine solche
Abdeckung kann aus Metall gefertigt sein und mit der
Scheibe vernietet werden.

PATENTANWALT
DIPL.-ING. ELMAR OTT

European Patent Attorney

Poststraße 24
D-7030 Böblingen

0095728

125/03 EP II      - 1 -      25. Mai 1983

Anmelder: Friedrich Burkart

           7472 Winterlingen-Harthausen

<u>Patentansprüche</u>

1. Einsatz für Rasenreiniger, der von einer senkrechten Antriebswelle des Rasenreinigers in Rotation versetzt wird und mit nach unten gerichteten Stiften in den Rasen eingreift, d a d u r c h   g e k e n n z e i c h n e t, daß der Einsatz (1) eine Scheibe (2) ist, die mehrere verteilt angeordnete Stifte (3-8; 11, 12; 14-17) hat.

2. Einsatz nach Anspruch 1, d a d u r c h   g e k e n n z e i c h n e t, daß die Stifte (3-8) Stahlnägel sind, die in Bohrungen der Scheibe (2) eingesetzt sind.

3. Einsatz nach Anspruch 2, d a d u r c h   g e k e n n z e i c h n e t, daß die Stahlstifte (3-8) beweglich in den Bohrungen sitzen und gegen Herausfallen gesichert sind.

4. Einsatz nach einem der vorhergehenden Ansprüche, d a d u r c h   g e k e n n z e i c h n e t, daß jeder der Stifte einen anderen Abstand vom Mittelpunkt der Scheibe (2) hat, als die übrigen Stifte.

5. Einsatz nach einem der vorhergehenden Ansprüche,

./.

dadurch gekennzeichnet, daß die Stifte (3-8; 11, 12) in einer Reihe nebeneinander angeordnet sind.

6. Einastz nach einem der vorhergehenden Ansprüche, dadurch gekennzeichnet, daß die Lage der Stifte (3-8; 11, 12; 14-17) so gewählt ist, daß keine Unwucht entsteht.

7. Einsatz nach einem der vorhergehenden Ansprüche, dadurch gekennzeichnet, daß die Stifte (11, 12) mit einem vorgegebenen Neigungswinkel an der Scheibe (2) befestigt sind, so daß die abstehenden Spitzen der Stifte (11, 12) entgegen der Drehrichtung (a) nach hinten gerichtet sind.

8. Einsatz nach einem der vorhergehenden Ansprüche, dadurch gekennzeichnet, daß an einer Scheibe (2) mit einem Durchmesser von 48 cm insgesamt 6 Stifte ( 3-8; 11,12) befestigt sind, die jeweils ungefähr 5 cm lang und 5 mm stark sind.

9. Einsatz nach einem der vorhergehenden Ansprüche, dadurch gekennzeichnet, daß die in einer Reihe angeordneten Stifte (3 bis 8) an der Oberseite der Scheibe (2) von einer Abdeckung überdeckt werden.

10. Einsatz nach Anspruch 9, dadurch gekennzeichnet, daß die Abdeckung als Leiste ausgebildet ist, an deren Unterseite Aussparungen vorgesehen sind, in die die Köpfe der Stifte (3 bis 8) hineinragen, und daß die Abdeckung mit der Scheibe (2) vernietet ist.

FIG. 1

FIG. 2

FIG. 3

FIG. 4